Europäisches Patentamt

European Patent Office

Office européen des brevets

(19)

(11) EP 0 554 736 B1

(12) **EUROPÄISCHE PATENTSCHRIFT**

(45) Veröffentlichungstag und Bekanntmachung des Hinweises auf die Patenterteilung:
**10.04.1996 Patentblatt 1996/15**

(51) Int Cl.6: **H04B 10/12**, H04B 10/14

(21) Anmeldenummer: **93101023.5**

(22) Anmeldetag: **23.01.1993**

(54) **Digitales optisches Nachrichtenübertragungssystem mit einem bei der Betriebswellenlänge dispersionsbehafteten Lichtwellenleiter**

Digital optical transmission system with a dispersing optical waveguide at the working wavelength

Système optique digital de tansmission d'information par l'aide d'un guide d'ondes optiques avec dispersion à la longeur d'ondes opérationnelles

(84) Benannte Vertragsstaaten:
**AT BE CH DE DK ES FR GB IT LI NL SE**

(30) Priorität: **01.02.1992 DE 4202863**
**21.05.1992 DE 4216790**
**12.09.1992 DE 4230601**

(43) Veröffentlichungstag der Anmeldung:
**11.08.1993 Patentblatt 1993/32**

(73) Patentinhaber: **Alcatel SEL Aktiengesellschaft**
**D-70435 Stuttgart (DE)**

(72) Erfinder:
• **Wedding, Berthold**
**W-7015 Korntal 2 (DE)**

• **Mittrich, Martin**
**W-7531 Neuhausen 3 (DE)**

(74) Vertreter: **Kugler, Hermann, Dipl.-Phys. et al**
**Alcatel SEL AG**
**Patent- und Lizenzwesen**
**Postfach 30 09 29**
**D-70449 Stuttgart (DE)**

(56) Entgegenhaltungen:
**US-A- 4 984 297**          **US-A- 5 023 950**

• **ELECTRONICS LETTERS, Band 25, Nr. 5, 2. MUrz 1989 Stevenage Herts, England A.R. CHRAPLYVY et al. "8 Gbit/s FSK Modulation of DFB Lasers with Optical Demodulation" page 319-321**
• **Optic Letters, Vol.6, Nr.2, Feb 1981, Seiten 58-60**
• **Optic Letters, Vol.7, Nr.3, März 1982, Seiten 139-141**

**Beschreibung**

Die Erfindung betrifft ein System nach dem Oberbegriff des Patentanspruchs 1.

Ein System mit den dort genannten Merkmalen ist bekannt aus: A.R. Chraplyvy et al: "8 Gbit/s FSK Modulation of DFB Lasers with Optical Demodulation", Electronics Letters, 2nd March 1989, Vol. 25, No. 5, Seiten 319 bis 321.

Bei der Übertragung von Digitalsignalen mit hoher Bitfolgefrequenz (im Gigabit-Bereich) ist die chromatische Dispersion (auch Materialdispersion genannt), die der Lichtwellenleiter des optischen Übertragungssystems bei der Betriebswellenlänge hat, ein Problem insofern, als sie die Streckenlänge, über die ein Digitalsignal hoher Bitfolgefrequenz übertragbar ist, begrenzt. Wünschenswert ist heutzutage einerseits eine Betriebswellenlänge für die optische Übertragung im Bereich von 1550 nm, da für solche Wellenlängen geeignete faseroptische Verstärker zur Verfügung stehen, und andererseits die Benutzung von Standard-Einmoden-Lichtwellenleitern, da diese bereits vielfach verlegt worden sind. Daher muß das Problem der chromatischen Dispersion des Lichtwellenleiters anders als durch Wahl der Betriebswellenlänge oder Wahl des Lichtwellenleiter-Typs gelöst werden.

Das bekannte System stellt folgende Lösung dar: Der Halbleiterlaser auf der Sendeseite des Systems wird mit dem zu übertragenden Digitalsignal nicht, wie es sonst üblich ist, in seiner Intensität moduliert, sondern in der Frequenz seines optischen Ausgangssignals. Diese Modulation wird FSK-Modulation (FSK = Frequency-Shift-Keying) genannt, wogegen die früher übliche Intensitätsmodulation "ASK"-Modulation (ASK = Amplitude-Shift-Keying) genannt wird. Man erreicht die FSK-Modulation, indem man den Injektionsstrom des Halbleiterlasers deutlich schwächer, also mit deutlich geringerem Modulationshub, moduliert, als man dies tun würde, wenn man die übliche ASK-Modulation erhalten wollte.

Durch die Frequenzmodulation hat das übertragene optische Signal einen geringeren Spektralbereich, als es bei der Intensitätsmodulation der Fall wäre, so daß sich die chromatische Dispersion des Lichtwellenleiters nicht mehr so nachteilig auswirkt.

Auf der Empfangsseite enthält das bekannte System ein optisches Interferometer, das die Frequenzmodulation des empfangenen optischen Signals in eine Amplitudenmodulation umsetzt, und einen optischen Empfänger für Direktempfang, der das optische intensitätsmodulierte Signal empfängt und daraus das übertragene Digitalsignal wiedergewinnt. Unter einem optischen Empfänger für Direktempfang versteht man gewöhnlich eine Anordnung aus einem optischen Detektor, einem Vorverstärker, einem Verstärker und einem Regenerator (letzterer heißt bisweilen auch Entscheider-Schaltung), wobei der optische Detektor zusammen mit dem Vorverstärker und dem Verstärker den zeitlichen Verlauf der Intensität des empfangenen optischen Signals in einen entsprechenden zeitlichen Verlauf eines elektrischen Signals umsetzt und der Regenerator aus dem elektrischen Signal das Digitalsignal wiedergewinnt. Erläutert sind solche optischen Empfänger zum Beispiel in dem Buch "Optical Fibers" von J. Geissler et al, Pergamon Press, Oxford, New York, Toronto, Sydney, Frankfurt, 1986, Seite 439 oder in H. Hamano et al; proc. ECOC '90, Amsterdam, Seiten 45 bis 48.

Das bekannte System ist wegen seines optischen Interferometers aufwendiger als frühere Systeme und daher unter Kostengesichtspunkten nachteilig, auch wenn es leistungsfähiger ist.

Es ist daher die Aufgabe der Erfindung, für das Problem der Übertragung eines Digitalsignals mit hoher Bitfolgefrequenz über einen bei der Betriebswellenlänge dispersionsbehafteten Lichtwellenleiter eine einfachere und damit kostengünstigere Lösung zu finden.

Der Anspruch 1 nennt die Merkmale eines erfindungsgemäßen Übertragungssystems, mit dem die Aufgabe gelöst ist.

Ein Aspekt der Erfindung ist auch, daß zum Empfang eines frequenzmodulierten optischen Signals, das einen bei seiner Wellenlänge dispersionsbehafteten Lichtwellenleiter durchlaufen hat, eine neue Empfangseinrichtung geschaffen wurde. Diese ist Gegenstand des Patentanspruchs 2.

Ein weiterer Aspekt der Erfindung ist, daß ein dispersionsbehafteter Lichtwellenleiter zum Umwandeln einer ursprünglichen Frequenzmodulation eines optischen Signals in eine Intensitätsmodulation verwendet wird. Eine solche Verwendung ist Gegenstand des Patentanspruchs 3.

Bei der Übertragung von Digitalsignalen kommt es zu unerwünschten Verformungen des Digitalsignals, wodurch die Übertragungsqualität verschlechtert wird.

Im praktischen Einsatz werden daher zur Beurteilung der Übertragungsqualität sogenannte Augendiagramme herangezogen. Diese Methode ist z.B. aus dem Buch "Datenübertragung Band I", von P.Bocker, Springer Verlag 1979, S.102ff bekannt. Eine Beeinflussung der Übertragungsqualität ist dabei jedoch nicht vorgesehen.

Es ist eine weitere Aufgabe der Erfindung, eine Lösung anzugeben, die Übertragungsqualität kontinuierlich zu beeinflussen. Dies ist Gegenstand des Patentanspruchs 10.

Ausgestaltungen der Erfindung ergeben sich aus den davon abhängigen Ansprüchen.

Außer den unerwünschten Verformungen bei der Übertragung können beim Empfang des Digitalsignals Fehler auftreten. Dies kann z.B. der Fall sein, wenn lange Folgen von gleichen Binärsignalen, z.B. eine Folge von logischen "1", vorkommen und im Empfänger Störimpulse, beispielsweise durch das Rauschen des Empfängers oder des elektrischen Vorverstärkers, auftreten. Überlicherweise wird das Digitalsignal vor der Übertragung verwürfelt (durch einen Scrambler), um lange Folgen von gleichen Binärsignalen zu vermeiden. Es gibt aber Nachrichtenübertragungssysteme, bei denen das Digitalsignal nicht verwürfelt wird. Bei diesen kann es zu Fehlern im empfangenen Digitalsignal kommen. Es ist eine Aufgabe der Erfindung, eine Lösung anzugeben, bei der die Fehlerhäufigkeit verringert ist. Die ist Gegenstand des Patentanspruchs 15.

Bevor die Erfindung anhand der Zeichnungen im einzelnen näher erläutert wird, soll nun zunächst erläutert werden, welche Idee ihr zugrunde liegt. Erfindungsgemäß bleibt die sendeseitige Einrichtung unverändert gegenüber dem eingangs genannten bekannten System, so daß ein frequenzmoduliertes optisches Signal über den Lichtwellenleiter zur Empfangseinrichtung übertragen wird. Als Empfangseinrichtung dient aber ein an sich im wesentlichen bekannter optischer Empfänger für Direktempfang, der typischerweise die Eigenschaft hat, daß er Intensitätsschwankungen seines optischen Eingangssignals in ein elektrisches Ausgangssignal umsetzt, also nicht für eine Frequenzmodulation, sondern für eine Intensitätsmodulation empfindlich ist.

Es stellt sich also die Frage, warum das System trotzdem funktioniert. Die Erklärung ist die folgende erfindungsgemäße Erkenntnis: Das sendeseitig in den Lichtwellenleiter eingestrahlte optische Signal besteht aus Anteilen verschiedener Wellenlängen, die sendeseitig nacheinander in den Lichtwellenleiter eingestrahlt werden. Wegen der chromatischen Dispersion des Lichtwellenleiters erfahren die beiden Signalanteile unterschiedliche Verzögerungen bei ihrer Übertragung über den Lichtwellenleiter. Am Ende des Lichtwellenleiters haben sich die Signalanteile mit den verschiedenen Wellenlängen zeitlich gegeneinander verschoben. Die dadurch entstehende Interferenz der beiden Signalanteile führt zu einer Variation der Intensität des am Ende des Lichtwellenleiters austretenden optischen Signals. Der zeitliche Verlauf der Intensitätsvariation hat die Eigenschaft, daß aus ihm der Verlauf des zu übertragenden Digitalsignals ableitbar ist.

Erfindungsgemäß wird also von der Erkenntnis Gebrauch gemacht, daß die Lichtwellenleiterstrecke selbst (gerade wegen der prinzipiell unerwünschten Eigenschaft ihrer chromatischen Dispersion) den Effekt hat, eine anfängliche Frequenzmodulation in eine solche Intensitätsmodulation umzuwandeln, die den Verlauf des Digitalsignals enthält.

In anderen Worten: Der dispersionsbehaftete Lichtwellenleiter selbst wird zum Umwandeln der ursprünglichen Frequenzmodulation in eine Intensitätsmodulation verwendet. Das über ihn übertragene optische Signal ist unmittelbar als Eingangssignal des auf die Intensität ansprechenden optischen Empfängers zu verwenden. Dem steht nicht entgegen, daß andere optische Einrichtungen, die nicht zum Umwandeln der Modulationsart sondern zu anderen Zwecken dienen, wie z.B. ein Isolator oder ein optischer Verstärker, dem optischen Empfänger vorgeschaltet sein können.

Reicht die zur überbrückung der Übertragungsstrek-

ke notwendige Lichtwellenleiter-Länge nicht aus, um die erforderliche Modulationsumwandlung zu bewirken, so kann sie durch eine Zusatz-Lichtwellenleiter-Länge verlängert werden. In diesem Falle ist es die gesamte Lichtwellenleiter-Länge, deren optisches Ausgangssignal als Eingangssignal des optischen Empfängers zu verwenden ist. Ein anderer Aspekt ist, daß in diesem Falle sowohl die Gesamtlänge des Lichtwellenleiters als auch seine Teil-Längen zum Umwandeln der Modulationsart verwendet ist.

Was den hier verwendeten Begriff "Frequenzmodulation" oder "FSK-Modulation" betrifft, so ist auf folgendes hinzuweisen: Der Begriff ist nicht beschränkt auf eine reine Frequenzmodulation. Wesentlich ist, daß es sich wie bei dem genannten bekannten System um eine Halbleiterlaser-Modulation handelt, die mit geringem Modulationshub ausgeführt wird. Meistens bleibt dabei die Intensität des optischen Ausgangssignals nicht konstant, sondern ändert sich zusammen mit der Frequenz. Trotzdem wird eine solche Modulation als FSK- oder Frequenzmodulation bezeichnet. Wichtig ist, daß man das damit erzeugte optische Ausgangssignal empfangsseitig nicht durch eine spezielle Vorrichtung in eine ASK-Modulation umsetzt, sondern direkt mit einem für Intensitätsmodulation empfindlichen Empfänger verarbeitet.

Aus Erik J. Bochove et al, "FM-AM conversion by material dispersion in an optical fiber", Optics Letters, Bd. 6, Nr. 2, Februar 1981, Seiten 58 bis 60, ist bekannt, daß die Material- und Wellenleiterdispersion in einer Glasfaser dazu verwendet werden kann, um ein FM-Signal in ein AM-Signal zu wandeln. Das FM-Signal ist hier ein frequenzmoduliertes Analogsignal, bei dem die Modulation eine Schmalbandmodulation mit einer Phasenmodulation $\Delta\varphi << 1$ ist.

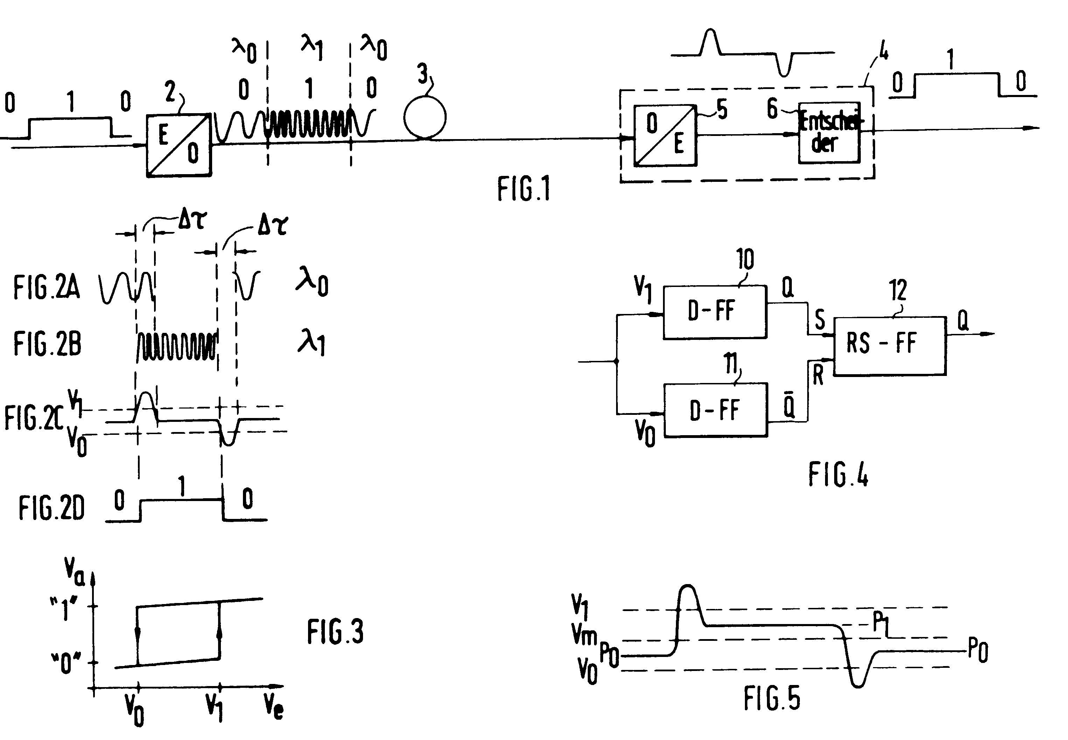

In einer weiteren Veröffentlichung von Erik J. Bochove et al, "Conversion of a wideband frequency-modulated signal to amplitude modulation through dispersion in an optical fiber", Optics Letters, Bd. 7, Nr. 3, März 1982, Seiten 139 bis 141, wird das System aus der genannten älteren Veröffentlichung überprüft. Dort ist die Frequenzmodulation eine lineare Frequenzmodulation (Chirp), deren zeitlicher Verlauf in Fig.1(b) gezeigt ist. Von einer Frequenz $f_0$ ausgehend, geht die Frequenz zu einem bestimmten Zeitpunkt sprunghaft auf eine Frequenz $f_0 + 1/2\Delta f_0$ über. Innerhalb der Modulationsdauer T nimmt die Frequenz linear bis zu einer Frequenz $f_0 - 1/2\Delta f$ ab, um dann sprunghaft auf die Frequenz $f_0$ überzugehen.

Einzelheiten über Systembestandteile auf der Sende- und Empfangsseite sind in den Veröffentlichungen nicht angegeben.

Wie bereits erwähnt ist die Frequenzmodulation in dem erfindungsgemäßen System eine FSK-Modulation, bei dem die Frequenz einen von zwei diskreten Werten einnimmt, und während der Bitdauer des Digitalsignals konstant bleibt.

Dies ist bei der Frequenzmodulation gemäß den genannten Veröffentlichungen von Erik J. Bochove et al nicht der Fall.

Die Erfindung wird nun anhand der Zeichnungen näher erläutert. Es zeigen:

Fig. 1    eine Blockdiagramm-Darstellung des erfindungsgemäßen Systems,

Fig. 2    den Signalverlauf an verschiedenen Stellen des Übertragungssystems zur Erläuterung von dessen Funktion,

Fig. 3    die typische Kennlinie eines als Entscheider-Schaltung 6 (Fig. 1) verwendbaren Schmitt-Triggers,

Fig. 4    ein Ausführungsbeispiel der in Fig. 1 gezeigten Entscheider-Schaltung,

Fig. 5    den Intensitätsverlauf des Eingangssignals des optischen Empfängers, wenn sendeseitig eine Frequenzmodulation mit gleichzeitiger Amplitudenmodulation erfolgt,

Fig. 6    zwei Ausführungsbeispiele eines Optisch-Elektrisch-Wandlers und

Fig. 7    Ersatzschaltbilder zur Erklärung der Tiefpaßfilterwirkung des Optisch-Elektrisch-Wandlers,

Fig. 8    ein Blockdiagramm des Systems mit einer Einrichtung zur Aufnahme von Augendiagrammen und einem Rechner,

Fig. 9    eine Darstellung des empfangenen Spannungsverlaufs, der dem optischen Signal entspricht, mit einem Störimpuls,

Fig. 10   eine Darstellung des empfangenen Spannungsverlaufs mit positiver und negativer Spannungsänderung und einem Störimpuls,

Fig. 11   ein Ausführungsbeispiel einer Schaltungsanordnung, zur Verbesserung der Störungssicherheit.

Das in Fig. 1 gezeigte erfindungsgemäße Übertragungssystem für Digitalsignale enthält auf seiner Sendeseite (linker Teil der Fig.) einen Elektrisch-Optisch Wandler 2, dessen wesentliches Element ein Halbleiterlaser ist und der wie beim Stand der Technik die Eigenschaft hat, ein elektrisches Eingangssignal in Form eines binären Digitalsignals durch Frequenzumtastung (englisch: FSK = Frequency Shift Keying) in ein entsprechend moduliertes optisches Ausgangssignal umzusetzen. Das optische Ausgangssignal hat also verschiedene Frequenzen für die verschiedenen Binärzustände des zu übertragenden Digitalsignals. In der Fig. 1 entspricht dem Binärzustand 0 eine Wellenlänge $\lambda_0$ und dem Binärzustand 1 eine Wellenlänge $\lambda_1$. Die Intensität bleibt bei dieser Modulation normalerweise konstant, wie es mit Wellenzügen mit unterschiedlichen Frequenzen, jedoch gleichen Amplituden schematisch angedeutet ist.

Diese sendeseitige Einrichtung ist über einen Lichtwellenleiter 3, der die Übertragungsstrecke bildet, mit der empfangsseitigen Einrichtung des Systems verbunden. Das Neue an dem System nach Fig. 1 ist, daß sich auf der Empfangsseite keine Vorrichtung bildet, um das übertragene optische Signal in eine Amplitudenmodulation umzusetzen, sondern daß das übertragene optische Signal direkt das Eingangssignal eines im wesentlichen an sich bekannten optischen Empfängers 4 bildet.

Der optische Empfänger 4 enthält einen Optisch-Elektrisch-Wandler 5, der einen optischen Detektor, einen Vorverstärker und einen Verstärker enthält und den zeitlichen Verlauf der Intensität seines optischen Eingangssignals in einen zeitlichen Verlauf der Amplitude seines elektrischen Ausgangssignals umsetzt. Weiter enthält der optische Empfänger 4 einen Entscheider 6 (bisweilen auch Regenerator genannt), der aus dem elektrischen Ausgangssignals des Optisch-Elektrisch-Wandlers 5 das übertragene Digitalsignal wiedergewinnt. Letzteres Signal ist am Ausgang schematisch angedeutet.

Es stellt sich hier gleich die Frage, warum ein optischer Empfänger 4, der typischerweise auf Intensitätsschwankungen und nicht auf Frequenzschwankungen seines optischen Eingangssignals anspricht, in der Lage ist, ein übertragenes frequenzmoduliertes optisches Signal in das darin enthaltene Digitalsignal umzusetzen. Die Erklärung ist: Es ist die Lichtwellenleiterstrecke 3 selbst, die aus der anfänglichen Frequenzmodulation des in sie eingestrahlten optischen Signals eine Amplitudenmodulation macht, und die entstehende Amplitudenmodulation hat die Eigenschaft, daß das übertragene Digitalsignal in ihr enthalten ist.

Oberhalb des optischen Empfängers 4 in Fig. 1 ist schematisch angedeutet, daß der Intensitätsverlauf des empfangenen Signals, den der Wandler 5 in einen entsprechenden Verlauf seines elektrischen Ausgangssignals umsetzt, von links nach rechts betrachtet, zuerst einen positiven Impuls und dann einen negativen Impuls hat. Wie anhand von Fig. 2 noch erläutert wird, bedeutet der positive Impuls, daß das Digitalsignal vom Zustand 0 zum Zustand 1 wechselt, und der negative Impuls bedeutet, daß es vom Zustand 1 in den Zustand 0 wechselt. Als Entscheider-Schaltung 6 ist also jede Schaltung geeignet, die ihr digitales Ausgangssignal von 0 auf 1 wechseln läßt, wenn ihr Eingangssignal einen vorgegebenen oberen Schwellenwert überschreitet und die ihr digitales Ausgangssignal von 1 auf 0 wechseln läßt, wenn ihr elektrisches Eingangssignal einen vorgegebenen unteren Schwellenwert unterschreitet. Im wesentlichen hat der Entscheider also wie bei jedem an sich bekannten optischen Empfänger die Aufgabe, aus dem elektrischen Ausgangssignal des Optisch-Elektrisch-Wandlers 5 das darin enthaltene Digitalsignal wiederzugewinnen. Wie er im einzelnen funktionieren muß, hängt wie immer vom Verlauf seines elektrischen Eingangssignals ab. Für das hier vorliegende werden an späterer Stelle noch einige Ausführungsbeispiele angegeben.

Anhand von Fig. 2 wird nun erläutert, wie bei der Übertragung des optischen Signals über den Lichtwellenleiter 3 die Umwandlung von der anfänglichen Frequenzmodulation in eine Intensitätsmodulation zustandekommt.

Zunächst wird an das in Fig. 1 gezeigte Beispiel erinnert, bei dem bei einer zu übertragenden Bitfolge 0 1 0 nacheinander Wellenzüge mit der Wellenlänge $\lambda_0$, $\lambda_1$ und $\lambda_0$ in den Lichtwellenleiter eingestrahlt werden. In Fig. 2 sind die nacheinander in den Lichtwellenleiter 3 eingestrahlten Wellenzüge (oder Signalanteile des optischen Signals) nicht in einer, sondern in zwei Zeilen dargestellt, in Zeile a die Wellenzüge mit der Wellenlänge $\lambda_0$ und in Zeile b der Wellenzug mit der Wellenlänge $\lambda_1$. Beide sind auf eine gemeinsame, von links nach rechts gerichtete Zeitachse bezogen.

Die chromatische Dispersion des Lichtwellenleiters 3 bewirkt, daß Licht mit der größeren Wellenlänge eine größere Laufzeit für die Lichtwellenleiter-Strecke benötigt als Licht mit der kleineren Wellenlänge. Betrachtet man am Lichtwellenleiter-Ende das Eintreffen der Signalanteile mit den verschiedenen Wellenlängen, so stellt man fest, daß es eine Zeitspanne $\Delta\tau$ gibt, während der noch der letzte Teil des ersten Wellenzugs mit der Wellenlänge $\lambda_0$ und gleichzeitig schon der erste Teil des Wellenzugs mit der Wellenlänge $\lambda_1$ auftritt. In anderen Worten: Der Wellenzug mit der Wellenlänge $\lambda_1$ erreicht bereits das Lichtwellenleiter-Ende, bevor der sich langsamer ausbreitende Wellenzug mit der Wellenlänge $\lambda_0$ zu Ende ist. $\Delta\tau$ ist dabei der Laufzeitunterschied der beiden Wellen und errechnet sich nach:

$$\Delta\tau = \Delta\lambda \cdot D \cdot L,$$

wobei

$\Delta\lambda$    der Unterschied zwischen $\lambda_0$ und $\lambda_1$ ist,

D    die chromatische Dispersion des Lichtwellenleiters und

L    die Länge der Lichtwellenleiter-Strecke 3 ist.

$\Delta\tau$ darf maximal so groß sein, wie die Dauer eines Bits des Digitalsignals. Ein geeigneter Wert läßt sich durch Wahl von $\Delta\lambda$, d.h. praktisch durch den Modulationshub, und eventuell der Länge L erreichen (D ist fest vorgegeben).

In entsprechender Weise wie am Anfang des Wellenzugs mit der Wellenlänge $\lambda_1$ kommt es an dessen Ende zu einem Effekt aufgrund der unterschiedlichen Laufzeiten, nämlich zu einem während der Laufzeitdifferenz $\Delta\tau$ bestehenden Zustand, daß der Wellenzug $\lambda_1$ bereits zu Ende ist und der zweite Wellenzug mit der Wellenlänge $\lambda_0$ noch nicht begonnen hat.

Somit ergibt der Laufzeitunterschied unterschiedlicher Wellenlängen beim Wechsel von $\lambda_0$ auf $\lambda_1$ den Zustand der Dauer $\Delta\tau$, daß die beiden Wellen gleichzeitig empfangen werden und beim Wechsel von $\lambda_1$ auf $\lambda_0$ den ebenso lange währenden Zustand, daß keine der beiden Wellen empfangen werden kann. Der erste Zustand bedeutet eine Interferenz der beiden Wellen mit der Folge, daß die resultierende Welle eine höhere Intensität als jede der beiden Einzelwellen hat,. und der zweite Zustand bedeutet ein Absinken der empfangenen Intensität auf 0.

In Zeile c von Fig. 2 ist der dadurch entstehende Intensitätsverlauf des am Ende des Lichtwellenleiters 3 austretenden optischen Signals schematisch gezeigt, den der Optisch-Elektrisch-Wandler in einen entsprechenden Verlauf seines elektrischen Ausgangssignals umwandelt. Dieses hat also einen beispielsweise je nach Vorzeichen der Dispersion und $\Delta\lambda$ positiven Impuls beim Wechsel von $\lambda_0$ auf $\lambda_1$ und einen negativen Impuls beim Wechsel von $\lambda_1$ auf $\lambda_0$. Aus seinem Verlauf kann die Entscheider-Schaltung 6 das übertragene binäre Digitalsignal wiedergewinnen, indem sie den Binärzustand ihres Ausgangssignals von 0 auf 1 wechseln läßt, wenn ihr Eingangssignal einen vorgegebenen ersten Schwellenwert $V_1$ überschreitet und von diesem Zustand in den Binärzustand 0 wechselt, wenn ihr Eingangssignal einen zweiten vorgegebenen Schwellenwert $V_0$ unterschreitet. In Zeile d von Fig. 2 ist der Verlauf des so wiedergewonnenen binären Digitalsignals gezeigt. Der erste Schwellenwert $V_1$ ist so gewählt, daß er oberhalb des beim Empfang nur einer einzigen Welle entstehenden Signalwertes liegt und der zweite Schwellenwert $V_0$ so, daß er unterhalb dieses "normalen" Signalwertes liegt.

Das Ausgangssignal des optischen Empfängers ist also ein bipolares Signal, und die Entscheider-Schaltung 6 hat die Aufgabe, aus ihm das binäre Digitalsignal in der üblichen NRZ-Form (NRZ = Non Return to Zero) wiederzugewinnen. Im folgenden werden einige hierfür geeignete Ausgestaltungen der Entscheider-Schaltung 6 erläutert. Als Entscheider-Schaltung, die vom Binärzustand 0 in den Binärzustand 1 geht, wenn ihre Eingangsspannung, wie in Fig. 2c gezeigt, einen ersten Schwellenwert $V_1$ überschreitet und vom Binärzustand 1 in den Binärzustand 0 übergeht, wenn ihre Eingangsspannung einen zweiten Schwellenwert $V_0$, der unterhalb von $V_1$ liegt, unterschreitet, ist ein "Schmitt-Trigger" geeignet, der eine Kennlinie nach Fig. 3 hat.

Fig. 3 zeigt die Kennlinie als Verlauf der Ausgangsspannung $V_a$ über der Eingangsspannung $V_e$ eines solchen Schmitt-Triggers. Wird die Eingangsspannung $V_e$ erhöht, so wechselt seine Ausgangsspannung bei einem Schwellenwert $V_1$ von einem unteren Wert, der den Binärzustand 0 bedeutet, auf einen oberen Wert, der den Binärzustand 1 bedeutet. Wird die Eingangsspannung von einem oberhalb $V_1$ liegenden Wert erniedrigt, so kippt die Ausgangsspannung erst bei einem unteren Schwellenwert $V_0$ von dem zweiten Zustand in den ersten Zustand zurück.

Solche Schmitt-Trigger sind an sich bekannt, zum Beispiel aus dem Buch "Halbleiter-Schaltungstechnik" von U. Tietze und C. Schenk, 8. Auflage, Springer-Verlag Berlin Heidelberg New York, Seiten 168 und 169 sowie 180 und 181.

Ein weiteres Ausführungsbeispiel ist ein Integrator in Form eines RC-Tiefpaßfilters. Sein Ausgangssignal steigt mit dem positiven Impuls an und fällt mit dem negativen Impuls wieder ab, so daß aus seiner ansteigenden und seiner abfallenden Flanke die ansteigende bzw. abfallende Flanke des übertragenen Digitalsignals mit einem einfachen D-Flipflop auf einfache Weise wiedergewonnen werden kann. Für den Fall, daß der positive und der negative Impuls unterschiedliche Energieinhalte haben, sollte ein Integrator mit unterschiedlicher Zeitkonstanten verwendet werden. Dies ist möglich, wenn man einen RC-Tiefpaß mit einer spannungsabhängigen Kapazität, zum Beispiel der Kapazität einer Varaktor-Diode, verwendet.

Ein weiteres Beispiel einer geeigneten Entscheider-Schaltung ist die in Fig. 4 gezeigte Schaltung aus zwei D-Flipflops und einem RS-Flipflop. Das Eingangssignal gelangt dabei parallel auf die beiden D-Flipflops 10 und 11. Das RS-Flipflop 12 hat Eingänge R und S, die mit dem Q-Ausgang des Flipflops 10 bzw. dem $\overline{Q}$-Ausgang des Flipflops 11 verbunden sind. Das D-Flipflop 10 kippt in den Zustand mit $Q = 1$, wenn das Eingangssignal der Entscheiderschaltung den Schwellenwert $V_1$ überschreitet, und das D-Flipflop 11 kippt in den Zustand $\overline{Q} = 1$, wenn das Eingangssignal den Schwellenwert $V_0$ unterschreitet. Das RS-Flipflop 12 kippt in den Zustand $Q = 1$, wenn sein Eingang S in diesen Zustand kippt, wenn also der Q-Ausgang vom D-Flipflop 10 gleich 1 wird, und es kippt in den Zustand $Q = 0$, wenn sein Eingang R gleich 1 wird, wenn also der $\overline{Q}$-Ausgang des D-Flipflops 11 gleich 1 wird. Der Q-Ausgang des RS-Flipflops 12 gibt also das wiedergewonnene binäre Digitalsignal aus.

Statt der beiden in Fig. 4 gezeigten D-Flipflops 10 und 11 kann auch ein einziges D-Flipflop mit zwei zueinander invertierten Ausgängen Q und $\overline{Q}$ verwendet werden, bei dem durch interne Unsymmetrie in der Schaltungsauslegung dafür gesorgt ist, daß es einen oberen Schwellenwert hat, bei dessen Überschreiten es in den Zustand $Q = 1$ geht und einen unteren Schwellenwert $V_0$, bei dessen Unterschreiten es in den Zustand $\overline{Q} = 1$ zurückkippt. Es hat dann eine Schalthysterese der in Fig. 3 gezeigten Art.

Eine besondere Ausführung der Entscheider-Schaltung 6 aus Fig. 1 ist möglich, wenn das auf der Sendeseite des Systems erzeugte optische Signal die Eigenschaft hat, daß die beschriebene Frequenzmodulation von einer Intensitätsmodulation begleitet wird. Dies ist dann der Fall, wenn der Halbleiterlaser über den Injektionsstrom moduliert wird. Eine solche Modulation ist zu unterscheiden von der normalen Intensitätsmodulation des Halbleiterlasers, die mit weitaus größerem Modulationshub ausgeführt würde. Es ist also in erster Linie eine Frequenzmodulation.

Betrachtet wird eine solche Frequenzmodulation, die bei der Wellenlänge $\lambda_1$ (d.h. der höheren Frequenz) einen höheren Pegel des optischen Ausgangssignals als bei der Wellenlänge $\lambda_0$ ergibt. In einem solchen Falle hat das am Ausgang des Optisch-Elektrisch-Wandlers 5 entstehende Signal einen Verlauf, wie er in Fig. 5 dargestellt ist. Es beginnt mit einem Pegel $P_0$, mit dem der Wellenzug mit der Wellenlänge $\lambda_0$ empfangen wird, steigt wie das Signal von Fig. 2c impulsförmig an, geht zurück auf einen Pegel $P_1$, mit dem der Wellenzug der Wellenlänge $\lambda_1$ empfangen wird und sinkt von dort impulsförmig mit einem negativen Impuls auf den Pegel $P_0$ wieder ab. In diesem Falle reicht es, das Überschreiten eines einzigen Schwellenwertes $V_m$ am Anfang des positiven Impulses und dessen Unterschreiten am Anfang des negativen Impulses zu detektieren. Auch dabei wird vom Vorhandensein des positiven und des negativen Impulses, der sich durch die Frequenzmodulation ergibt, Gebrauch gemacht. Als Entscheider-Schaltung kann dann eine übliche Entscheider-Schaltung, z.B. ein D-Flipflop, mit einem Schwellenwert $V_m$ verwendet werden, wie sie auch bei an sich bekannten optischen Empfängern üblicherweise verwendet wird.

Selbstverständlich kann auch eine Entscheider-Schaltung der in Fig. 4 gezeigten Art mit zwei Schwellenwerten $V_1$ und $V_0$ verwendet werden.

Abweichend von der oben erläuterten Realisierung des Integrators als Bestandteil der Entscheiderschaltung, wobei der Integrator nach dem Optisch-Elektrisch-Wandler angeordnet ist, ist auch die folgende Ausführung möglich.

Erfindungsgemäß wird davon Gebrauch gemacht, daß der Photodetektor eine Kapazität $C_D$ besitzt und in Verbindung mit einem zusätzlichen Widerstand R oder dem Eingangswiderstand $R_i$ eines nachfolgenden Verstärkers als RC-Tiefpaßfilter wirkt. Durch Einstellen der Vorspannung $V_D$ kann die Kapazität $C_D$ des Photodetektors variiert werden und somit die integrierende Wirkung des Optisch-Elektrisch-Wandlers beeinflußt werden.

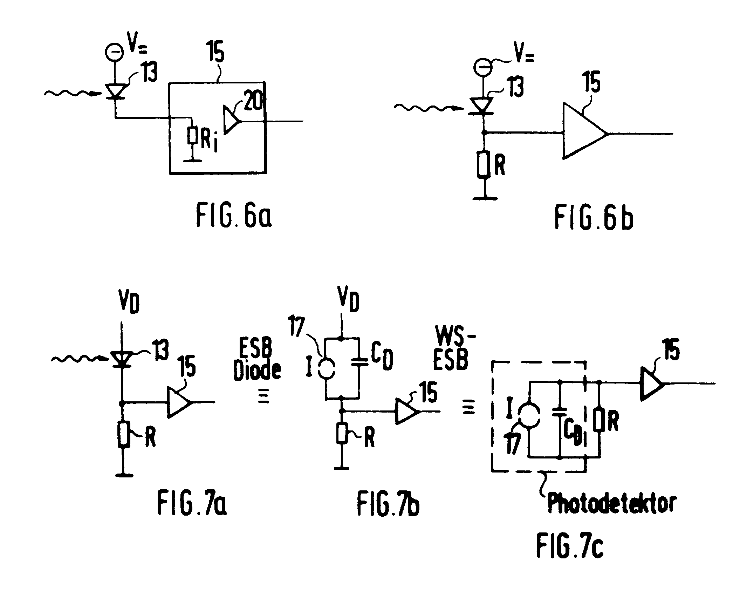

In Fig. 6 sind Ausführungsbeispiele eines Optisch-Elektrisch-Wandlers 5 gezeigt. Hierbei ist an den Photodetektor 13 eine Vorspannung $V_D$ angelegt. Die Kapazität $C_D$ des Photodetektors 13 wirkt in Verbindung mit dem Eingangswiderstand $R_i$ des Verstärkers 15, Fig. 6a, oder, wie in Fig. 6b, mit einem zusätzlichen Widerstand R als RC-Tiefpaßfilter. In Fig. 6a ist der Eingangswiderstand $R_i$ getrennt als Bestandteil des Verstärkers 15 gezeigt.

Die Erläuterung der Integrator- oder Tiefpaßfilterfunktion erfolgt anhand von Fig. 7, ausgehend vom Ausführungsbeispiel in Fig. 6b. In Fig. 7b wird für den Photodetektor das vereinfachte Ersatzschaltbild verwendet. Die Stromquelle liefert einen Photostrom, dessen Betrag von der eingestrahlten Lichtleistung abhängig ist. Im anschließenden Wechselstromersatzschaltbild, Fig. 7c, ergibt sich die Parallelschaltung von idealer Stromquelle 17, Widerstand R und Kapazität $C_D$. Dort ist somit das RC-Tiefpaßfilter erkennbar.

Wie bereits oben erwähnt, werden zur Beurteilung der Übertragungsqualität Augendiagramme aufgenommen. Die Aufnahme von Augendiagrammen stellt im allgemeinen eine Labormaßnahme zur Beurteilung der Übertragungsqualität dar. Hier dient sie zur Beeinflussung der Übertragungsqualität und ist Bestandteil des Systems.

Wie die Beeinflussung der Übertragungsqualität im Einzelnen erfolgt, ist im folgenden beschrieben.

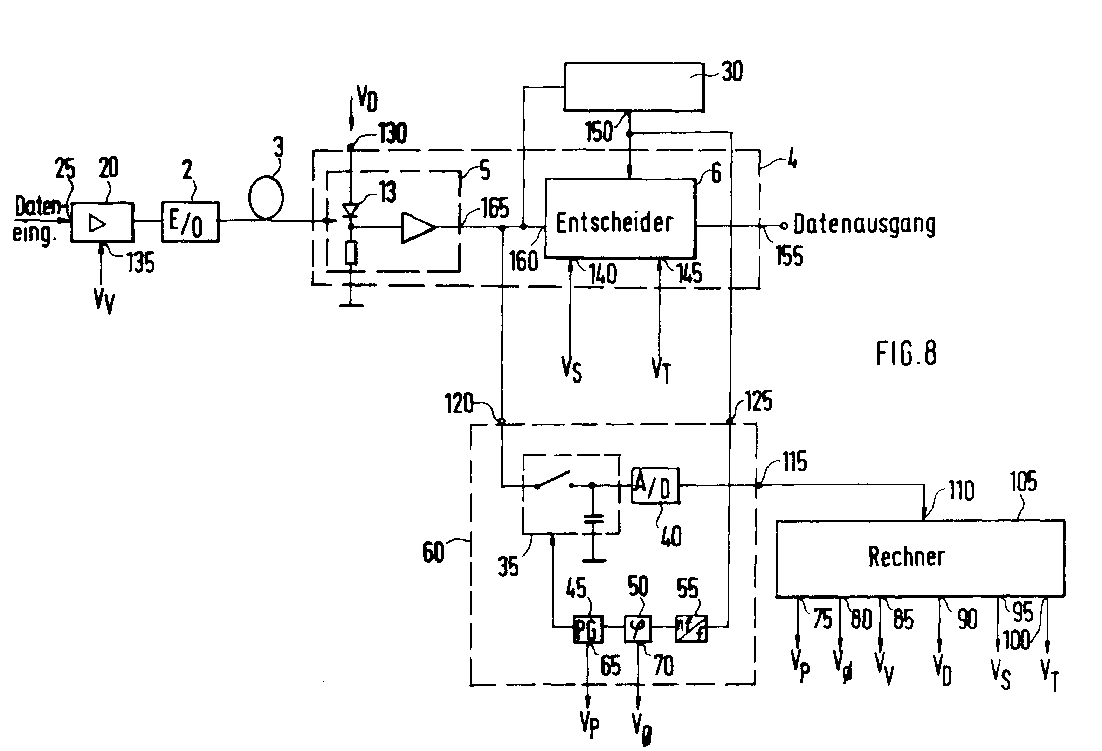

Das System mit den erfindungsgemäßen Ergänzungen ist in Fig. 8 gezeigt. Es besteht zusätzlich aus einem regelbaren Verstärker 20, einer Einrichtung 60 zur Aufnahme von Augendiagrammen, einem Rechner 105 und einer Einrichtung 30 zur Taktableitung des Digitalsignals. Diese Einrichtung zur Taktableitung ist Bestandteil eines jeden digitalen Übertragungssystems, wurde jedoch in Fig. 1 nicht eingezeichnet. Sie ist mit einem Ausgang 165 des Optisch-Elektrisch-Wandlers 5 und einem Eingang 160 der Entscheider-Schaltung 6 verbunden und hat einen Ausgang 150 für den Takt.

Der Verstärker 20 hat einen Eingang 25 für das Digitalsignal und einen Eingang 135 für eine Stellgröße $V_V$ und ist mit dem Elektrisch-Optisch-Wandler 2 verbunden.

Die Entscheider-Schaltung hat neben dem bereits erwähnten Eingang 160 noch einen Eingang 140 für eine Stellgröße $V_S$ und einen Eingang 145 für eine Stellgröße $V_T$ und einen Datenausgang 155.

Der Optisch-Elektrisch-Wandler 5 hat einen Eingang 130 für eine Stellgröße $V_D$, der mit der Photodiode 13 verbunden ist.

Die Einrichtung 60 zur Aufnahme von Augendiagrammen ist über einen Eingang 120 mit dem Ausgang 165 des Optisch-Elektrisch-Wandlers 5 und über einen Eingang 125 mit dem Ausgang 150 der Einrichtung 30 zur Taktableitung verbunden. Sie besteht aus einer Abtast-Halte-Schaltung 35, einem Analog-Digital-Wandler 40, einem Frequenzteiler 55, einem Phasenschieber 50 und einem Pulsgenerator 45. Auf den Frequenzteiler 55, der mit dem Eingang 125 verbunden ist, folgt der Phasenschieber 50 und der Pulsgenerator 45, der mit dem Abtast-Halte-Glied 35 verbunden ist. Der Pulsgenerator hat einen Eingang 65 für eine Stellgröße $V_P$ und der Phasenschieber 50 hat einen Eingang 70 für eine Stellgröße $V_\phi$.

Der Rechner 105 ist über einen Eingang 110 mit einem Ausgang 115 der Einrichtung 60 zur Aufnahme von Augendiagrammen verbunden. Er hat die folgenden Ausgänge für die folgenden Stellgrößen:

-     Ausgang 75 für $V_P$
-     Ausgang 80 für $V_\phi$
-     Ausgang 85 für $V_V$
-     Ausgang 90 für $V_D$
-     Ausgang 95 für $V_S$
-     Ausgang 100 für $V_T$.

Die Funktion der Einrichtung 60 zur Aufnahme von Augendiagrammen entspricht der eines Sampling-Oszilloskops, dessen Funktion beispielsweise in Klein, P.E., "Das Oszilloskop", Franzis-Verlag, München 1979, beschrieben ist.

Die Einrichtung 60 bestimmt den Verlauf eines Augendiagramms, das sich aus dem empfangenen Digitalsignal ergibt. Dieses Augendiagramm wird als Ist-Augendiagramm bezeichnet. Der Rechner 105 vergleicht dieses Ist-Augendiagramm mit einem vorgegebenen Augendiagramm, dem Soll-Augendiagramm, und leitet aus den Abweichungen Stellgrößen ab, die an den Ausgängen z.B. als analoge Spannungswerte zur Verfügung stehen und zu den regelbaren Systemkomponenten weitergeleitet werden.

Wie die regelbaren Systemkomponenten im einzelnen geregelt werden, wird im folgenden beschrieben.

Um den Verstärker 20 auf der Sendeseite regeln zu können, muß die Stellgröße $V_V$ von der Empfangs- auf die Sendeseite übertragen werden.

Diese Übertragung kann beispielsweise bei einem bidirektionalen Übertragungssystem dadurch erfolgen, daß die Stellgröße $V_V$ mit einem Elektrisch-Optisch-Wandler in ein optisches Signal gewandelt wird und dieses im Wellenlängenmultiplex-Verfahren auf die Sendeseite übertragen wird. Dort erfolgt eine Wandlung von einem optischen Signal in ein elektrisches Signal, das wiederum die Stellgröße $V_V$ darstellt.

Damit kann der Verstärker und somit auch der Elektrisch-Optisch-Wandler folgendermaßen geregelt werden:

Die Stellgröße $V_V$ bewirkt eine Änderung $\Delta I$ des Ausgangsstromes des Verstärkers, die proportional zur Stellgröße $V_V$ ist, d.h. $\Delta I \sim V_V$. Eine Stromänderung $\Delta I$ des Elektrisch-Optisch-Wandlers 2 bewirkt eine Frequenzänderung $\Delta v$ des optischen Digitalsignals, die proportional zur Stromänderung $\Delta I$ ist; d.h. $\Delta v \sim \Delta I$. Die Frequenzänderung $\Delta v$ ist äquivalent zu einer Wellenlängenänderung $\Delta \lambda$. Dadurch ist der Frequenzhub des Optisch-Elektrisch-Wandlers 2 beeinflußbar. Eine weitere Stellgröße $V_D$ regelt die Vorspannung der Photodiode des Optisch-Elektrisch-Wandlers 5 und dadurch, wie bereits beschrieben, die Kapazität der Photodiode. Damit ist der Frequenzgang des Optisch-Elektrisch-Wandlers regelbar, was von Vorteil ist, wenn ein Integrator mit unterschiedlicher Zeitkonstante verwendet werden soll. Dies wurde bereits in Zusammenhang mit dem Integrator erwähnt.

Der Schwellenwert der Entscheider-Schaltung 6 kann mit der Stellgröße $V_S$ geregelt werden.

Die Einrichtung zur Taktableitung 30 liefert einen Takt konstanter Frequenz. Die Regelung der Entscheider-Schaltung durch die Stellgröße $V_T$ erfolgt derart, daß die Phase des Taktes geregelt wird, d.h. es wird der Entscheidungs-Zeitpunkt so bestimmt, daß die Öffnung des Augendiagramms am größten ist.

Ebenfalls regelbar ist der Pulsgenerator 45 und der Phasenschieber 50 der Einrichtung 60 zur Aufnahme von Augendiagrammen. Die Stellgröße $V_P$ regelt den Pulsgenerator und die Stellgröße $V_\phi$ regelt den Phasenschieber. Dadurch wird die Abtast-Halte-Schaltung gesteuert und somit der Zeitpunkt des Abtastens.

Durch die hier beschriebenen Maßnahmen kann das Augendiagramm, das sich aus dem empfangenen Digitalsignal ergibt, beeinflußt werden und die Übertragungsqualität des Systems kann optimiert werden.

Unabhängig von dem bisher beschriebenen System kann die Aufnahme von Augendiagrammen, der Vergleich mit einem Soll-Augendiagramm und die Regelung von Systemkomponenten bei jedem optischen Nachrichtenübertragungssystem zur Übertragung von Digitalsignalen erfolgen.

Bei der hier beschriebenen Übertragung über einen dispersionsbehafteten Lichtwellenleiter ergibt sich im optischen Empfänger ein intensitätsmoduliertes Signal. Eine Entscheider-Schaltung mit Zwischenspeicherung gewinnt daraus das Datensignal zurück.

Dieses Signal kann unter Umständen, wie bereits erwähnt, durch Störimpulse verfälscht werden.

Im folgenden wird das Entstehen eines Fehlers und eine Maßnahme zur Reduzierung der Fehlerhäufigkeit beschrieben.

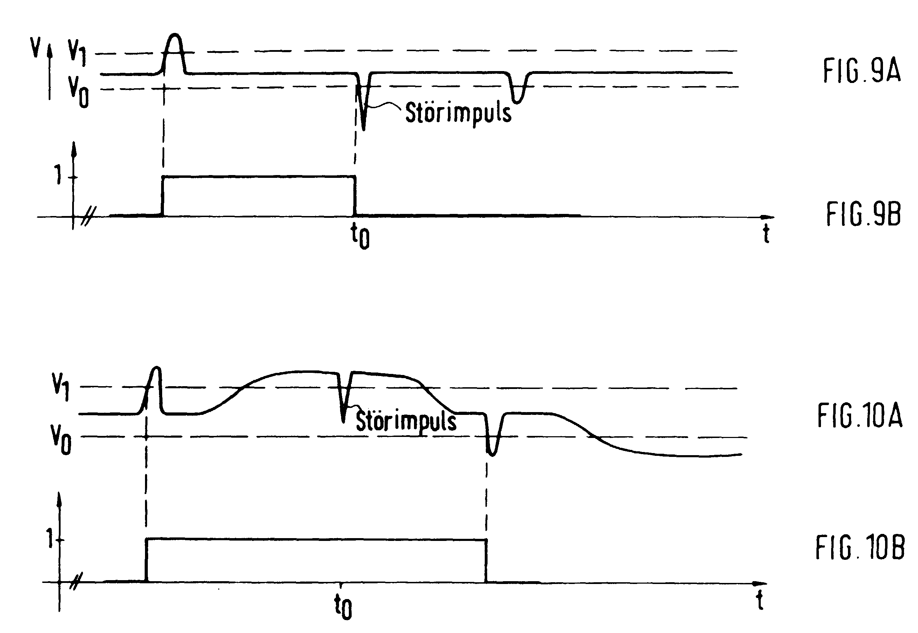

In Fig. 9 a) ist beispielsweise die Verfälschung des im Empfänger entstehenden elektrischen Signals durch einen negativen Störimpuls gezeigt. Es ist dort der Fall betrachtet, daß in dem oben erläuterten Verlauf des elektrischen Ausgangssignals empfangsseitigen Optisch-Elektrisch-Wandlers zu einem Zeitpunkt $t_0$ ein negativer Störimpuls auftritt. Die Höhe es Störimpulses ist hier so groß, daß der Schwellenwert $V_0$ der Entscheider-Schaltung unterschritten wird und das durch den Entscheider wiedergewonnene Digitalsignal vom Zustand "1" in den Zustand "0" wechselt. Dieser Zustandsübergang zum Zeitpunkt $t_0$ stellt hier einen Fehler im wiedergewonnenen Datensignal dar, der sich fortpflanzt.

Um die Häufigkeit von solchen Fehlern zu verringern, wird im optischen Sender das zu übertragende optische Signal, das ein frequenzmoduliertes ist, in Abhängigkeit vom Digitalsignal bei Bedarf in seiner Intensität variiert.

Diese Maßnahme führt dazu, daß das elektrische Signal, das am Ausgang des Optisch-Elektrisch-Wandlers 5 (Fig. 1) entsteht, zusätzlich zu den Impulsen, die vom Digitalsignal kommen, noch weitere Spannungsänderungen hat. Einzelheiten dieser Maßnahme werden später erläutert.

In Fig. 10 a) ist das elektrische Signal (Spannungsverlauf) mit einer positiven und negativen Spannungsänderung gezeigt.

Tritt nun während der positiven Spannungsänderung zum Zeitpunkt $t_0$ ein negativer Störimpuls auf, dessen Höhe in diesem Beispiel gleich der des in Fig. 9 a) gezeigten Störimpulses ist, so ist durch die positive Spannungsänderung verhindert, daß der untere Schwellenwert $V_0$ unterschritten wird. Somit entsteht im empfangenen Digitalsignal kein Fehler.

Das gleiche gilt, wenn während einer negativen

Spannungsänderung ein positiver Störimpuls vorkommt. Dadurch, daß die Höhe von Störimpulsen starken Schwankungen unterliegt, sowohl in positiver als auch in negativer Richtung, kann es trotzdem noch zu Fehlern kommen. Nämlich immer dann, wenn die Höhe groß genug ist, um z.B. den unteren Schwellenwert zu unterschreiten. In diesem Fall tritt nur während der Dauer des Sörimpulses ein Fehler auf. Danach wird das Ausgangssignal wieder auf den korrekten Wert zurückgesetzt. Zu einer Fehlerfortpflanzung kommt es dabei nicht.

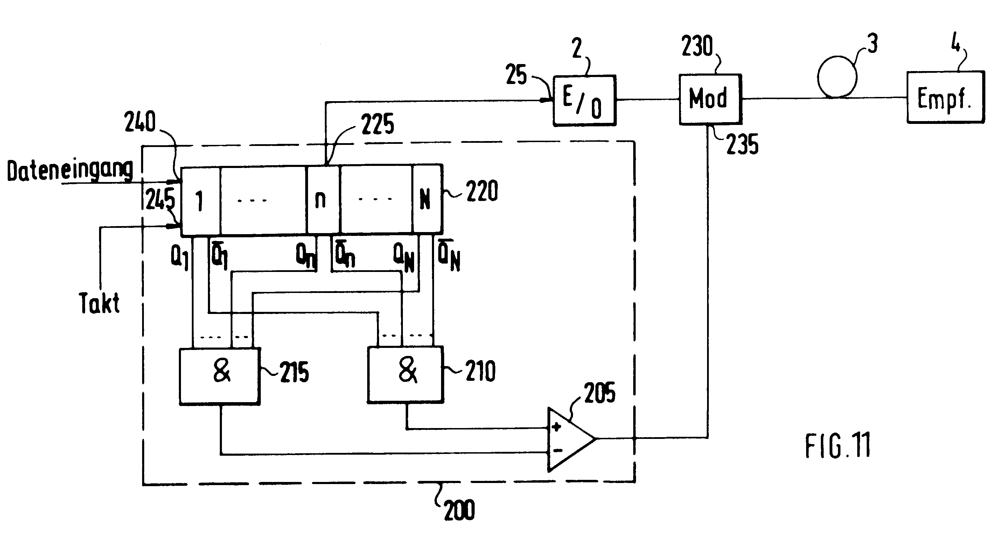

Im folgenden wird anhand von Fig. 11 erläutert, wann und wie es zu positiven oder negativen Spannungsänderungen kommt, und es wird eine Schaltungsanordnung angegeben, die die Spannungsänderungen erzeugt.

In Fig. 11 ist die Sendeseite des in Fig. 1 dargestellten Systems gezeigt, hier ergänzt durch eine Schaltungsanordnung 200 und einen optischen Intensitätsmodulator, die dazu dienen dem optischen Signal Intensitätsschwankungen aufzuprägen.

Ein optischer Intensitätsmodulator ist ein Bauelement, dessen optische Transmission von der anliegenden Spannung abhängig ist. Ein Beispiel dafür ist ein Mach-Zehnder-Interferometer. Weitere Beispiele dafür sind in der Veröffentlichung von Robert G. Waller, "High-Speed III-V Semiconductor Intensity Modulators", IEEE Journal of Quantum Electronics, Vol. 27, No. 3, March 1991, pp. 654-667, beschrieben.

Die Schaltungsanordnung 200 besteht aus einem N-stelligen Schieberegister 220, zwei UND-Gattern 210, 215 und einem Differenzverstärker 205. Das Schieberegister 220 hat einen Eingang 240 für das Digitalsignal und einen Eingang 245 für einen Takt. Ein Ausgang 225 ist mit einem Eingang 25 des Elektrisch-Optisch-Wandlers 2 verbunden. $Q_i$ und $\overline{Q}_i$ ($i=1,2,...,N$) sind Ausgänge des Schieberegisters, die mit UND-Gattern 210, 215 verbunden sind: $Q_i$ z.B. mit dem UND-Gatter 215 und $\overline{Q}_i$ mit dem UND-Gatter 210. Die Ausgänge der UND-Gatter sind mit Eingängen eines Differenzverstärkers 205 verbunden, dessen Ausgang mit einem Eingang 235 des optischen Amplitudenmodulators 230 verbunden ist.

In das Schieberegister wird das zu übertragende Digitalsignal sequenziell eingeschrieben. Die UND-Gatter bilden eine Logikschaltung, die prüft, ob alle N Ausgänge, $Q_i$ oder $\overline{Q}_i$, des Schieberegisters den gleichen logischen Binärzustand haben. Sind alle Ausgänge $Q_i$="1", wird eine positive Spannung vom Ausgang des Differenzverstärkers 205 an den optischen Intensitätsmodulator weitergegeben, sind alle Ausgänge $\overline{Q}_i$="1", wird eine negative Spannung weitergegeben.

Eine positive Spannung am optischen Intensitätsmodulator hat eine höhere Transmission zur Folge, eine negative Spannung eine geringere. Durch diese Änderung der Transmission und damit der Lichtleistung des optischen Signals werden die Intensitätsänderungen erzeugt. Es wird nur dann eine positive oder negative Intensitätsänderung erzeugt und gesendet, wenn eine bestimmte Anzahl von gleichen Binärsignalen aufeinander folgt.

Eine Intensitätsänderung dauert so lange, bis der erste Ausgang $Q_i$ ungleich den übrigen Ausgängen ist. Eine Intensitätsänderung kann somit auch mehrere Takte andauern.

Intensitätsänderungen des optischen Signals werden im Empfänger in Spannungsänderungen umgesetzt. Durch diese Maßnahme ist die Gefahr von Störimpulsen bei langandauernden Folgen von gleichen Binärsignalen und damit der Verfälschung des empfangenen Binärsignals reduziert.

**Patentansprüche**

1. System zur optischen Übertragung eines Digitalsignals über einen bei der Betriebswellenlänge dispersionsbehafteten Lichtwellenleiter (3), mit einem optischen Sender (2) auf der Sendeseite des Systems, dessen optisches Ausgangssignal in seiner Frequenz durch das Digitalsignal moduliert wird, und mit einem optischen Empfänger (4) auf der Empfangsseite, der sein optisches Eingangssignal in ein dessen Intensitätsverlauf entsprechendes elektrisches Signal umwandelt und aus dem elektrischen Signal das Digitalsignal wiedergewinnt,
**dadurch gekennzeichnet,**
daß das vom optischen Sender (2) als frequenzmoduliertes optisches Signal gesendete und über den Lichtwellenleiter (3) zur Empfangsseite übertragene Signal dem auf den Intensitätsverlauf seines optischen Eingangssignals ansprechenden optischen Empfänger (4) als Eingangssignal zugeführt ist.

2. Empfangsseitige Einrichtung für ein System zur optischen Übertragung eines Digitalsignals über einen dispersionsbehafteten Lichtwellenleiter, bei dem das Digitalsignal durch Frequenzmodulation eines Halbleiterlasers über den Lichtwellenleiter optisch übertragen wird, wobei die empfangsseitige Einrichtung einen optischen Empfänger (4) enthält, der sein optisches Eingangssignal in ein dessen Intensitätsverlauf entsprechendes elektrisches Signal umwandelt und aus diesem das Digitalsignal wiedergewinnt,
**dadurch gekennzeichnet,**
daß das Eingangssignal des auf den Intensitätsverlauf seines optischen Eingangssignals ansprechenden optischen Empfängers (4) das über den Lichtwellenleiter übertragene ursprünglich frequenzmodulierte optische Signal ist.

3. Verwendung eines bei einer bestimmten Wellenlänge dispersionsbehafteten Lichtwellenleiters zum Umwandeln eines durch ein Digitalsignal FSK-modulierten optischen Signals derselben Wellenlänge in ein optisches Signal, das das Digitalsignal in seinem Intensitätsverlauf enthält.

4. System nach Anspruch 1 oder empfangsseitige Einrichtung nach Anspruch 2, dadurch gekennzeichnet, daß der optische Empfänger (4) eine Entscheider-Schaltung (6) enthält, die von einem ersten binären Zustand (0) in einen zweiten binären Zustand (1) wechselt, wenn ihr Eingangssignal impulsförmig ansteigt und von dem zweiten Zustand (1) in den ersten Binärzustand (0) wechselt, wenn ihr Eingangssignal impulsförmig absinkt.

5. System oder Einrichtung nach Anspruch 1 bzw. 2, dadurch gekennzeichnet, daß die Frequenzmodulation des Halbleiterlasers von einer Intensitätsmodulation begleitet ist.

6. System oder Einrichtung nach Anspruch 1 bzw. 2, dadurch gekennzeichnet, daß der optische Empfänger (4) zum Wiedergewinnen des digitalen Signals aus dem elektrischen Signal, eine Entscheider-Schaltung (6) hat, deren Zustand von einem ersten Binärzustand (0) in einen zweiten Binärzustand (1) wechselt, wenn das elektrische Signal einen vorgegebenen Schwellenwert ($V_m$) überschreitet und von dem zweiten Binärzustand (1) wieder in den ersten Binärzustand (0) wechselt, wenn es den vorgegebenen Schwellenwert ($V_m$) unterschreitet.

7. System oder Einrichtung nach Anspruch 1 oder 2, dadurch gekennzeichnet, daß zur Wiedergewinnung des digitalen Signals ein optischer Empfänger (4) mit Integrator eingesetzt ist.

8. System oder Einrichtung nach Anspruch 7, dadurch gekennzeichnet, daß der Integrator ein in optischen Empfänger (4) enthaltenes und hinter dessen Optisch-Elektrisch-Wandler (5) angeordnetes integrierendes Tiefpaßfilter ist.

9. System oder Einrichtung nach Anspruch 7, dadurch gekennzeichnet, daß als Integrator der Optisch-Elektrisch-Wandler (5) des optischen Empfängers (4) verwendet ist, wobei zur Einstellung der Integratorwirkung die Vorspannung und dadurch die Kapazität des im Optisch-Elektrisch-Wandler (5) enthaltenen Photodetektors einstellbar ist.

10. System nach Anspruch 1, dadurch gekennzeichnet, daß auf der Empfangsseite eine Einrichtung (60) zur Aufnahme eines Augendiagramms des empfangenen Digitalsignals und ein Rechner (105) vorhanden ist, der das aufgenommene Augendiagramm mit einem vorgegebenen Augendiagramm vergleicht und aus Abweichungen eine oder mehrere Stellgrößen für eine oder mehrere regelbare Systemkomponenten ableitet und damit diese Systemkomponenten regelt.

**11.** System nach Anspruch 10, dadurch gekennzeichnet, daß Mittel vorhanden sind, um eine der Stellgrößen, die zur Regelung eines dem optischen Sender (2) vorgeschalteten Verstärkers (20) vorgesehen ist, zur Sendeseite und zu dem Verstärker zu übertragen und daß der Rechner (105) den Verstärker (20) regelt.

**12.** System nach Anspruch 10, dadurch gekennzeichnet, daß der Rechner (105) über eine der Stellgrößen die Vorspannung der Photodiode regelt.

**13.** System nach Anspruch 10, dadurch gekennzeichnet, daß der Rechner (105) über eine der Stellgrößen den Schwellenwert der Entscheider-Schaltung (6) regelt.

**14.** System nach Anspruch 10, dadurch gekennzeichnet, daß der Rechner (105) über eine der Stellgrößen die Phase des Taktes für die Entscheider-Schaltung (6) regelt.

**15.** System nach Anspruch 1, dadurch gekennzeichnet, daß auf der Sendeseite eine Schaltungsanordnung (200) vorhanden ist, die eine positive oder negative Ausgangsspannung abgibt, wenn eine bestimmte Anzahl von aufeinanderfolgenden gleichen Binärsignalen des Eingangssignals vorliegt und ein optischer Intensitätsmodulator (230) vorhanden ist, der aufgrund der Ausgangsspannung der Schaltungsanordnung die Lichtleistung des optischen Signals erhöht, wenn die aufeinanderfolgenden gleichen Binärsignale einen ersten Binärzustand haben und die Lichtleistung des optischen Signals erniedrigt, wenn die aufeinanderfolgenden gleichen Binärsignale einen zweiten Binärzustand haben.

**Claims**

**1.** A system for the optical transmission at a digital signal via an optical waveguide (3) with dispersion at the operating wavelength, with an optical sender (2) at the tramsmitting end of the system, whose optical output signal is frequency-modulated by the digital signal, and with an optical receiver (4) at the receiving end, which converts its optical input signal into an electrical signal that corresponds to its intensity, and recovers the digital signal from the electrical signal, characterized in that the signal transmitted by the optical sender (2) as a frequency-modulated optical signal, and transmitted via the optical waveguide (3) to the receiving end, is supplied to the optical receiver (4) as the input signal which reacts to the intensity of its optical input signal.

**2.** An installation at the receiving end of a system for the optical transmission of a digital signal via a dispersion-inflected optical waveguide, wherein the digital signal is optically transmitted via the optical waveguide by modulating the frequency of a semiconductor laser, wherein the installation at the receiving end contains an optical receiver (4) which converts its optical input signal into an electrical signal that corresponds to its intensity, and recovers the digital signal from the electrical signal, characterized in that the input aignal of the optical receiver (4), which reacts to the intensity of its optical input signal, is the frequency-modulated signal originally transmitted via the optical waveguide.

**3.** Use of an optical waveguide, with dispersion at a predetermined wavelength, for converting an optical signal of the same wavelength, which was FSK-modulated by a digital signal, into an optical signal that contains the digital signal in its intensity.

**4.** A system an claimed in claim 1, or the installation at the receiving end as claimed in claim 2, characterized in that the optical receiver (4) contains a decision circuit (6), which changes from a first binary condition (0) into a second binary condition (1) when its input signal rises in pulse form, and changes from the second condition (1) into the first binary condition (0) when its input signal decreases in pulse form.

**5.** A system or installation as claimed in claim 1 or 2, characterized in that the frequency modulation of the semiconductor laser is accompanied by an intensity modulation.

**6.** A system or installation as claimed in claim 1 or 2, characterized in that the optical receiver (4) contains a decision circuit (6) for recovering the digital signal from the electrical signal, which changes from a first binary condition (0) into a second binary condition (1) when the electrical signal exceeds a predetermined threshold value ($V_m$), and returns from the second binary condition (1) into the fiat binary condition (0) when the electrical signal drops below the predetermined threshold value ($V_m$).

**7.** A system or installation as claimed in claim 1 or 2, characterized in that an optical receiver (4) with an integrator is used to recover the digital signal.

**8.** A system or installation as claimed in claim 7, charaterized in that the integrator is an integrating low-pass filter contained in the optical receiver (4), and is located behind its optical-electrical convertor (5).

**9.** A system or installation as claimed in claim 7, characterized in that the integrator is the optical-electrical converter (5) of the optical receiver (4), in which the bias voltage, and thereby the capacity or the photodetector located inside the optical-electrical converter (5), can be adjusted to control the integration effect.

10. A system an claimed in claim 1, characterized in that a device (60) for making a visual diagram of the received digital signal is located at the receiving end, and a computer (105) which compares the made visual diagram with a specified visual diagram, and derives one or more correction variables for one or more adjustable system components from any deviations, thereby controlling these system components.

11. A system as claimed in claim 10, characterized in that means are present for transmitting one of the correcting variables provided to control an amplifier (20) located before the optical sender (2), to the receiving end and to the amplifier, and that the computer (105) controls the amplifier (20).

12. A system as claimed in claim 10, characterized in that the computer (105) controls the bias voltage of the photodiode by means of one at the controlling variables.

13. A system as claimed in claim 10, characterized in that the computer (105) controls the threshold value of the decision circuit (6) by means of one of the correction variables.

14. A system as claimed in claim 10, characterized in that the computer (105) controls the phase of the decision circuit (6) pulse by means of one of the correction variables.

15. A system as claimed in claim 2, characterized in that circuit arrangement (200) is provided at the transmission end, which emits a positive or a negative output voltage, when a predetermined number of successive equal binary signal of the input signal are present, and an optical intensity modulator (230) in present, which increases the light output of the optical signal on the basis of the starting voltage of the circuit arrangement, when the successive equal binary signals reach a first binary condition, and lowers the light output of the optical signal when the successive equal binary signals reach a second binary condition.

**Revendications**

1. Système pour la transmission optique d'un signal numérique par l'intermédiaire d'un guide d'ondes lumineuses (3) avec dispersion sur sa longueur d'ondes, comportant du côté émission du système un émetteur optique (2), dont le signal de sortie optique est modulé dans sa fréquence par le signal numérique, et comportant du côté réception un récepteur optique (4), qui convertit son signal optique d'entrée en un signal électrique correspondant à sa courbe d'intensité et récupère le signal numérique à partir du signal électrique, caractérisé en ce que, le signal émis par l'émetteur optique (2) sous forme de signal optique à modulation de fréquence et transmis par l'intermédiaire du guide d'ondes lumineuses (3) au côté réception est amené sous forme de signal d'entrée au récepteur optique (4) répondant à la courbe d'intensité de son signal optique d'entrée.

2. Dispositif côté réception pour un système de transmission optique d'un signal numérique par l'intermédiaire d'un guide d'ondes lumineuses avec dispersion, sur lequel le signal numérique est transmis optiquement par l'intermédiaire du guide d'ondes lumineuses par modulation de fréquence d'un laser à semi-conducteurs, le dispositif côté réception comportant un récepteur optique (4), qui convertit son signal optique d'entrée en un signal électrique correspondant à sa courbe d'intensité et le récupère à partir du signal numérique, caractérisé en ce que le signal d'entrée du récepteur optique (4) répondant à la courbe d'intensité de son signal optique d'entrée est le signal optique à modulation de fréquence d'origine, transmis par l'intermédiaire du guide d'ondes lumineuses.

3. Utilisation d'un guide d'ondes lumineuses avec dispersion sur une longueur d'ondes déterminée, pour la conversion d'un signal optique de même longueur d'ondes, modulé FSK par un signal numérique, en un signal optique, qui contient le signal numérique dans sa courbe d'intensité.

4. Système selon la revendication 1 ou dispositif de réception selon la revendication 2, caractérisé en ce que le récepteur optique (4) contient un circuit de décision (6), qui passe d'un premier état binaire (0) à un second état binaire (1) lorsque son signal d'entrée monte sous forme d'impulsion, et passe du second état binaire (1) au premier état binaire (0) lorsque son signal d'entrée descend sous forme d'impulsion.

5. Système ou dispositif selon la revendication 1 ou 2, caractérisé en ce que la modulation de fréquence du laser à semi-conducteurs est accompagnée d'une modulation d'intensité.

6. Système ou dispositif selon la revendication 1 ou 2, caractérisé en ce que le récepteur optique (4) présente, pour la récupération du signal numérique à partir du signal électrique un circuit de décision (6), dont l'état passe d'un premier état binaire (0) à un second état binaire (1) lorsque le signal électrique dépasse une valeur seuil ($V_m$) prédéfinie, et repasse du second état binaire (1) au premier état binaire (0) lorsque le signal électrique est inférieur à la valeur seuil ($V_m$) prédéfinie.

7. Système ou dispositif selon la revendication 1 ou 2, caractérisé en ce qu'est utilisé pour la récupération du signal numérique un récepteur optique (4) comportant un intégrateur.

8. Système ou dispositif selon la revendication 7, caractérisé en ce que l'intégrateur est un filtre passe-bas contenu dans le récepteur optique (4) et disposé de façon intégrée derrière le convertisseur optique-électrique (5) de ce dernier.

9. Système ou dispositif selon la revendication 7, caractérisé en ce qu'est utilisé comme intégrateur le convertisseur optique-électrique (5) du récepteur optique (4), la tension de polarisation et par là même la capacité du photodétecteur contenu dans le convertisseur optique-électrique (5) étant réglables pour le réglage de l'action de l'intégrateur.

10. Système selon la revendication 1, caractérisé en ce que qu'existent côté réception un dispositif (60) pour l'établissement d'un diagramme visuel du signal reçu et un calculateur (105), qui compare le diagramme visuel établi à un diagramme visuel prédéfini, et déduit, à partir des écarts, une ou plusieurs grandeurs de réglage pour un ou plusieurs composants réglables du système et règle ainsi ces composants du système.

11. Système selon la revendication 10, caractérisé en ce qu'existent des moyens pour transmettre côté émission et à l'amplificateur une des grandeurs de réglage prévue pour le réglage d'un amplificateur (20) branché en amont de l'émetteur optique (2), et en ce que le calculateur (105) règle l'amplificateur (20).

12. Système selon la revendication 10, caractérisé en ce que le calculateur (105) règle la tension de polarisation de la photodiode par l'intermédiaire d'une des grandeurs de réglage.

13. Système selon la revendication 10, caractérisé en ce que le calculateur (105) règle la valeur-seuil du circuit de décision (6) par l'intermédiaire d'une des grandeurs de réglage.

14. Système selon la revendication 10, caractérisé en ce que le calculateur (105) règle la phase du cycle pour le circuit de décision (6) par l'intermédiaire d'une des grandeurs de réglage.

15. Système selon la revendication 1, caractérisé en ce qu'existe côté émission une disposition de circuit (200), qui produit une tension de sortie positive ou négative, quand un nombre déterminé de signaux binaires successifs est présent dans le signal d'entrée, et qu'existe un modulateur optique d'intensité (230), qui élève l'efficacité lumineuse du signal optique sur la base de la tension de sortie de la disposition de circuit, lorsque les signaux binaires identiques successifs présentent un premier état binaire, et qui abaisse l'efficacité lumineuse du signal optique lorsque les signaux binaires identiques successifs présentent un second état binaire.

EP 0 554 736 B1

FIG.1

FIG.2A $\lambda_0$

FIG.2B $\lambda_1$

FIG.2C

FIG.2D

FIG.3

FIG.4

FIG.5

FIG.6a

FIG.6b

FIG.7a

FIG.7b

FIG.7c

Photodetektor

FIG.8

FIG.9A

FIG.9B

FIG.10A

FIG.10B

FIG.11

EP 0 554 736 B1